# EUROPÄISCHE PATENTANMELDUNG

(11) **EP 2 390 227 A1**
(43) Veröffentlichungstag der Anmeldung: **30.11.2011**
(21) Anmeldenummer: 11004377.5
(22) Anmeldetag: 27.05.2011
(51) Int. Cl.: C01B 33/18, C01B 33/12

(54) **Verfahren zur Herstellung von Kieselsäure und deren Verwendung als Pflanzennährstoff, Dämm- und Isolierstoff sowie als Filterhilfsmittel**

(30) Priorität: 27.05.2010 DE 102010021757
(71) Anmelder: Klose, Ingeborg, 56626 Andernach (DE); Zepke, Frank, 48351 Everswinkel (DE)
(72) Erfinder: Klose, Ingeborg, 56626 Andernach (DE); Zepke, Frank, 48351 Everswinkel (DE)
(74) Vertreter: Patentanwälte Bitterich, Dr. Keller, Schwertfeger

(57) **Zusammenfassung**

Die Erfindung betrifft ein Verfahren zur Herstellung von Kieselsäure unter Verwertung von Pflanzen oder Pflanzenteilen, insbesondere solche der Familie der Gräser (Poaceae) oder Algen (Diatomeae), wobei die Phytomasse in einem ersten Schritt unter reduzierenden Bedingungen und unter Ausschluss von Sauerstoff in einer Pyrolyse zunächst zu einem Biomassekoks als Zwischenprodukt verschwelt und dieser in einem zweiten Schritt in einer sich anschließenden oxidativen Nachverbrennung in Anwesenheit von Sauerstoff zu einer vollständig mineralisierten Phytoasche mit darin angereicherter Kieselsäure oder Kieselsäureverbindungen umgewandelt wird.

## Beschreibung

Die vorliegende Erfindung betrifft ein Verfahren zur Herstellung von Kieselsäure unter Verwertung von Pflanzen oder Pflanzenteilen gemäß dem Oberbegriff des Anspruchs 1.

Kieselsäuren spielen eine wichtige Rolle in der Landwirtschaft, der Bauindustrie, der Stahlindustrie, der Lebens- und Genussmittelindustrie als Filterhilfsmittel, aber auch im Pharmabereich und in der Kosmetik. Ein zunehmend wichtiges Feld ist hierbei die Verwendung von Kieselsäuren als Isolierstoff bzw. Dämmstoff.

Dämmstoffe und daraus hergestellte Dämmelemente gibt es in verschiedenen Ausführungen und Materialien. Gattungsgemäße Dämmstoffe sind beispielsweise in der DE 10 2008 005 548 A1, DE 10 2007 051 830 A1, DE 10 2007 042 000 A1, DE 103 332 99 B4 oder DE 9302904 U1 beschrieben. In vielen Fällen werden als Dämmstoffe anorganische Stoffe wie Polysterol-Verbindungen, Hartschaum (PUR) sowie Stein- und Glaswolle eingesetzt. Daneben finden auch organische Materialien wie z.B. Hanf Verwendung zur Wärmedämmung. Neuere Dämmplatten basieren auf dem Vakuumprinzip, welches die Ausführung besonders dünner Dämmelemente oder Paneele ermöglicht, d.h. man erreicht eine maximale Dämmwirkung bei zugleich geringer Schichtdicke. Häufig bestehen solche Vakuum-Dämmstoffe aus gepresster Kieselsäure oder PUR-Hartschaum. Der Vorteil ist, dass solche Dämmkerne nicht brennbar, langlebig und zugleich hitzebeständig sind. Daneben sind Dämmstoffe auf der Basis gepresster Kieselsäure leicht recycelbar.

In der DE 10 2008 036 430 A1 beispielsweise wird ein Baustein mit integrierter hydrophober, mikroporöser Kieselsäure als Wärmedämmung beschrieben. Die als mikroporöser Dämmstoff verwendete pyrogene Kieselsäure entsteht als Kondensationsprodukt in einem Flammofen bei Temperaturen von mehr als 1500° C durch die thermische Umwandlung von Siliciumchlorid mit Wasserstoff und Sauerstoff zu Siliciumdioxid. In dem Prozess entstehen Kieselsäureaggregate und größere Agglomerate, letztendlich also Siliciumdioxide, welche als Produkt einer chemischen Reaktion aus Monokieselsäuren hervorgehen. Monokieselsäure bildet sich durch Hydrolyse von Siliciumhalogeniden oder Tetraalhoxysilanen.

Ascherückstände von Verbrennungsprozessen in denen Stroh von Getreide oder getrocknete Pflanzen wie z.B. Miscanthus oder Triticale eingesetzt werden, werden bestenfalls zu Zwecken der Düngung oder Bodenverbesserung auf landwirtschaftlich genutzte Flächen verwendet. Zumeist werden diese Aschen mehrheitlich deponiert oder finden bei der Herstellung von Zement Verwendung. Bei vielen der bislang verwendeten Stoffe oder Verbrennungsrückständen, die Kieselsäure enthalten, besteht das Problem, dass diese bestimmte Lungenerkrankungen oder Krebs auslösen oder begünstigen können (z.B. Silikose), was u.a. auf den hohen Kohlenstoffgehalt und die Zerstäubung der enthaltenen Mineralien wie Cristobalit zurückzuführen ist. Dies ist unbefriedigend.

Ein weiterer Grund für das geringe Interesse der Landwirtschaft an den Verbrennungsrückständen ist der relativ geringe Nährstoffgehalt. Aschen werden daher eher als Abfallprodukt denn als Ausgangsprodukt für einen thermischen oder chemischen Umwandlungsprozess gesehen.

Vor diesem Hintergrund ist es Aufgabe der vorliegenden Erfindung, ein alternatives Verfahren zur Herstellung von Kieselsäure unter Verwertung organischer Phytomasse anzugeben, welches die zuvor genannten Nachteile, insbesondere die mit üblichen Aschen verbundenen gesundheitlichen Risiken vermeidet.

Diese Aufgabe wird gelöst durch ein Verfahren mit den Merkmalen des Anspruchs 1.

Das erfindungsgemäße Verfahren basiert auf der Verwertung von Pflanzen oder Pflanzenteilen in einem thermischen Umwandlungsprozess, bei dem die Ausgangsprodukte organischer Herkunft sind. Das Verfahren besteht aus einem zweistufigen Prozess, bei dem Pflanzen oder Pflanzenteile, vorzugsweise solche der Familie der Gräser (Poaceae) oder der Algen (Diatomeae) als Phytomasse in einem ersten Schritt unter reduzierenden Bedingungen und unter Ausschluss von Sauerstoff in einer Pyrolyse zunächst zu einem Biomassekoks als Zwischenprodukt verschwelt und dieser in einem zweiten Schritt in einer sich anschließenden oxidativen Nachverbrennung in Anwesenheit von Sauerstoff zu einer vollständig mineralisierten und mit amorpher Kieselsäure angereicherten Phytoasche umgewandelt wird. Bereits im ersten Verfahrensschritt wird ein Teil des Kohlenstoffs umgewandelt. Der als Zwischenprodukt im ersten Schritt hervorgehende Biomassekoks beinhaltet, je nach eingesetzter Phytomasse und den jeweils gewählten Prozessbedingungen, noch zwischen 5 und 20 % elementaren Kohlenstoff. Dieser Restkohlenstoff wird in dem zweiten Verfahrensschritt im Rahmen einer oxidativen Nachverbrennung des rotglühenden Biomassekoks nahezu vollständig, idealerweise vollständig verbrannt.

In einer bevorzugten Ausführungsform besteht das erfindungsgemäße Verfahren aus einem ersten Pyrolyseschritt, der unter reduzierenden Bedingungen und unter Ausschluss von Sauerstoff bei Temperaturen zwischen 250° und 1100° C, besonders bevorzugt zwischen 500° und 900° C, durchgeführt wird und dem sich unmittelbar die unter Anwesenheit von Sauerstoff nachgeschaltete oxidative Nachverbrennung des Restkohlenstoffs anschließt. Überraschenderweise haben die Erfinder dabei festgestellt, dass durch dieses zweistufige thermische Behandlungsverfahren der in dem Prozess eingesetzten Phytomasse die Konzentration der Mineralstoffe (darunter auch Nährstoffe wie Kalium, Phosphat oder Kalzium) erhöht wird. Als besonderer Vorteil hat sich erwiesen, dass dabei auch die Kieselsäurekonzentration der in der Phytomasse enthaltenen Kieselsäure erhöht wird, d.h. es kommt zu einer Anreicherung der Kieselsäure oder Kieselsäureverbindungen in der in dem thermischen Prozess entstehenden mineralisierten Phytoasche. Zugleich ist diese nahezu vollständig von Restkohlenstoff befreit. Die Anreicherung von Kieselsäure bzw. kieselsäurehaltigen Verbindungen in der mineralisierten Phytoasche erfolgt erfindungsgemäß mit einem Faktor zwischen 2 und 4.

Die Erfinder haben ferner überraschenderweise festgestellt, dass durch das erfindungsgemäße zweistufige thermische Herstellungsverfahren eine Umkristallisation des (gesundheitsschädlichen) Cristobalit-Minerals zu amorpher Kieselsäure stattfindet. Durch die Umkristallisation von Cristobalit werden die Risiken der Auslösung einer Silikose oder gar schwerer Krebserkrankungen erheblich reduziert oder verhindert.

Vorzugsweise werden als Pflanzen oder Pflanzenteile solche der Familie der Gräser (Poaceae) oder der Algen (Diatomeae) eingesetzt. Dabei wird in einer bevorzugten Ausführungsform die vor dem ersten Verfahrensschritt eingesetzte Phytomasse vor der Umwandlung zu Biomassekoks in einem vorherigen Trocknungsschritt entwässert und/oder getrocknet.

Der in dem zweiten Verfahrensschritt im Rahmen der oxidativen Nachverbrennung in dem Biomassekoks gebundene Kohlenstoff wird nahezu vollständig zu Energiegase (hauptsächlich Kohlenstoffmonoxid, Wasserstoff) umgewandelt. Dieses energiereiche Gasgemisch kann zur energetischen Ausnutzung dem ersten Verfahrensschritt für die Pyrolyse rückgeführt werden, wodurch ein autarker energetischer Kreislauf entsteht, der durch eine hohe Energieeffizienz gekennzeichnet ist. Dies stellt einen nicht unerheblichen Vorteil bei der Durchführung des erfindungsgemäßen Verfahrens.

Vorzugsweise wird die oxidative Nachverbrennung bei einer Temperatur zwischen 900° und 1100° C bei atmosphärischem Druck durchgeführt. Die Verbrennung wird dabei so lange durchgeführt, bis die im zweiten Schritt entstehende Phytoasche nur noch geringste elementare Kohlenstoffanteile enthält. Der genaue Kohlenstoffgehalt kann je nach Prozessbedingungen durch übliche Mess- und Analyseverfahren gegebenenfalls im Endprodukt ermittelt werden. Bei den eingesetzten Gräsern der Familie Poaceae handelt es sich beispielsweise um Vertreter wie Mais, Weizen, Gerste, Roggen, Hafer, Reis, Hirse oder Schilfrohr. Besonders bevorzugt sind getrocknete Pflanzen oder Pflanzenteile wie Maisstroh, Weizenstroh, Gerstenstroh und Gerstenspelzen, Roggenstroh, Haferstroh, Reisstroh und Reisspelzen, Hirsestroh sowie die ober- und unterirdischen Pflanzenteile von Schilf. Auch Schachtelhalme und Kieselalgen sind bevorzugt geeignet.

Neben einer Anreicherung von Kieselsäure in der mineralisierten Phytoasche beobachtet man ferner eine Anreicherung von anderen Pflanzennährstoffen wie Kalium, Phosphat oder Kalzium. Auch deren Konzentration wird durch das erfindungsgemäße zweistufige Verfahren angereichert. Die auf diese Weise in der mineralisierten Phytoasche angereicherten Pflanzennährstoffe können beispielsweise als Pflanzenstärkungsmittel oder Düngemittel in der Landwirtschaft Verwendung finden. Durch die Anreicherung der Nährstoffe und Mineralien in der Phytoasche wird diese als Grund- bzw. Rohstoff für die Herstellung von Pflanzenstärkungsmitteln oder Düngemitteln besonders interessant. In bisherigen Aschen war deren Konzentration zu niedrig, um eine sinnvolle Verwertung herbeizuführen.

Die erfindungsgemäß erzeugte mineralisierte Phytoasche kann sowohl in gemahlener, granulierter oder kompaktierter Form für die jeweilige Anwendung eingesetzt werden. Beispiel hierfür sind Zusammensetzungen von Kalk-Silicat-Produkten wie z.B. Kalksandstein und Porenbeton. Daneben kann die erfindungsgemäße mineralisierte Phytoasche auch in Zementgebundenen Systemen, als Baustoff oder als Dämmstoff Verwendung finden.

In vielen metallverarbeitenden Industrieanlagen werden als Dämmstoff, insbesondere bei Hochtemperaturprozessen innerhalb metallurgischer Gefäße, granulierte Aschen (beispielsweise aus Reisschalen-Kieselsäure) eingesetzt. Hierbei besteht insbesondere das Problem einer staubarmen Ausbringung bzw. Beschickung und die damit verbundenen gesundheitlichen Risiken. Mit dem erfindungsgemäßen Verfahren ist es möglich, Cristobalithaltige Aschen zu einer amorphen Kieselsäure umzuwandeln und die gesundheitlichen Risiken der Zerstäubung drastisch zu vermindern oder zu verhindern. Daher eignet sich die erfindungsgemäß hergestellte Kieselsäure oder Kieselsäureverbindungen auch für den Einsatz in der Kosmetik, im Pharmaziebereich oder bei Nahrungsergänzungsprodukten.

Ein weiterer Vorteil des erfindungsgemäßen Verfahrens besteht darin, dass die in dem ersten Verfahrensschritt entstehenden Energiegase (Pyrolysegase wie Kohlenmonoxid und Wasserstoff) in Kombination mit der thermischen Energie bei der oxidativen Nachverbrennung ein nahezu völlig Energie-autarkes System darstellen und je nach Prozessbedingungen sogar einen Energieüberschuss leisten können. Ermöglicht wird dies letztendlich durch die vollständige energetische Verwertung des in der eingesetzten Phytomasse enthaltenen elementaren Kohlenstoffs.

Die erfindungsgemäß hergestellte/n Kieselsäure oder Kieselsäureverbindungen eignet/eignen sich daher als Dämmstoff, vorzugsweise in Hochtemperaturprozessen, als Baustoff, als Nährstofflieferant bzw. Zusatzstoff in Pflanzenstärkungsmitteln oder Düngemitteln, oder als Filterhilfsmittel. Eine bevorzugte Verwendung der erfindungsgemäß hergestellten Kieselsäure oder Kieselsäureverbindungen ist deren Nutzung als Dämmkern in einem Dämmelement oder Paneel. Der erfindungsgemäß hergestellte Dämmstoff kann zur Behandlung, vorzugsweise zur Wärmedämmung oder Isolation von Oberflächen, insbesondere bei Behältern, Leitungssystemen oder Gebäuden, verwendet werden.

## Patentansprüche

1. Verfahren zur Herstellung von Kieselsäure unter Verwertung von Pflanzen oder Pflanzenteilen, insbesondere solche der Familie der Gräser (Poaceae) oder Algen (Diatomeae), **dadurch gekennzeichnet, dass** die Phytomasse in einem ersten Schritt unter reduzierenden Bedingungen und unter Ausschluss von Sauerstoff in einer Pyrolyse zunächst zu einem Biomassekoks als Zwischenprodukt verschwelt und dieser in einem zweiten Schritt in einer sich anschließenden oxidativen Nachverbrennung in Anwesenheit von Sauerstoff zu einer vollständig mineralisierten Phytoasche mit darin angereicherter Kieselsäure oder Kieselsäureverbindungen umgewandelt wird.

2. Verfahren nach Anspruch 1, **dadurch gekennzeichnet, dass** die Phytomasse vor der Umwandlung zu Biomassekoks in einem Trocknungsschritt entwässert und/oder getrocknet wird.

3. Verfahren nach Anspruch 1 oder 2, **dadurch gekennzeichnet, dass** der erste Schritt als Pyrolyse bei einer Temperatur zwischen 250° C und 1100° C bei atmosphärischem Druck durchgeführt wird.

4. Verfahren nach Anspruch 3, **dadurch gekennzeichnet, dass** die Pyrolyse bei einer Temperatur zwischen 500° C und 900° C durchgeführt wird.

5. Verfahren nach einem der vorhergehenden Ansprüche, **dadurch gekennzeichnet, dass** der in dem Biomassekoks gebundene Kohlenstoff bei der oxidativen Nachverbrennung im zweiten Schritt vollständig in thermische Energie umgewandelt wird.

6. Verfahren nach Anspruch 5, **dadurch gekennzeichnet, dass** die im zweiten Schritt bei der oxidativen Nachverbrennung gewonnene thermische Energie dem ersten Schritt, der Pyrolyse rückgeführt wird.

7. Verfahren nach einem der vorhergehenden Ansprüche, **dadurch gekennzeichnet, dass** die oxidative Nachverbrennung bei einer Temperatur zwischen 900° C und 1100° C bei atmosphärischem Druck durchgeführt wird.

8. Verfahren nach einem der vorhergehenden Ansprüche, **dadurch gekennzeichnet, dass** die oxidative Nachverbrennung so lange erfolgt, bis die im zweiten Schritt entstehende Phytoasche nur noch geringe elementare Kohlenstoffanteile enthält.

9. Verfahren nach einem der vorhergehenden Ansprüche, **dadurch gekennzeichnet, dass** die im zweiten Schritt entstandene Kieselsäure oder Kieselsäureverbindungen zu einem Dämm- oder Isolierstoff, Baustoff, Düngemittel oder Filterhilfsstoff weiterverarbeitet wird.

10. Verfahren nach einem der vorhergehenden Ansprüche, **dadurch gekennzeichnet, dass** es sich bei der Phytomasse um Gräser der Familie Poaceae, ausgewählt aus der Gruppe Mais, Weizen, Gerste, Roggen, Hafer, Reis, Hirse oder Schilfrohr, und/oder um Kieselalgen (Diatomeae) und/oder Schachtelhalme (Equisitaceae) handelt.

11. Verwendung einer Kieselsäure oder Kieselsäureverbindungen, hergestellt nach einem Verfahren gemäß einem der Ansprüche 1 bis 10, für die Herstellung eines Pflanzenstärkungsmittels, eines Düngemittels, eines Dämm- oder Isolierstoffes, eines Baustoffes oder eines Filterhilfsmittels.

12. Kieselsäure oder Kieselsäureverbindung, hergestellt nach einem Verfahren gemäß einem der Ansprüche 1 bis 10.
